# EUROPEAN PATENT APPLICATION

(11) **EP 4 822 441 A1**
(43) Date of publication of application: **14.10.2026**
(21) Application number: 26170506.5
(22) Date of filing: 02.04.2026
(51) Int. Cl.: G03G 15/00, G06F 3/12

(54) **IMAGE FORMING APPARATUS AND ALERTING METHOD**

(30) Priority: 09.04.2025 JP 2025064408
(71) Applicant: Sharp Kabushiki Kaisha, Sakai City, Osaka 590-8522 (JP)
(72) Inventor: ITAI, Tsutomu, Osaka, 590-8522 (JP)
(74) Representative: Müller Hoffmann & Partner

(57) **Abstract**

An image forming apparatus includes a display, a printer capable of printing on a selected sheet, and one or more controllers. The one or more controllers display, on the display, an alert screen for use of label paper if the label paper has been selected as the sheet.

## Description

### BACKGROUND OF THE INVENTION

### 1. Field of the Invention

The disclosure relates to an image forming apparatus and an alerting method.

### 2. Description of the Related Art

Japanese Patent Application Laid-Open No. 2019-119141 discloses an image forming apparatus that displays a sheet setting confirmation screen including the current setting information upon detection of a sheet placed on the manual feed tray.

### SUMMARY OF THE INVENTION

An object of an aspect of the disclosure is to provide an image forming apparatus and an alerting method capable of reducing a risk of occurrence of a malfunction such as apparatus failure during printing using label paper.

An image forming apparatus according to an aspect of the disclosure includes a display, a printer capable of printing on a selected sheet, and one or more controllers, in which the one or more controllers display, on the display, an alert screen for use of label paper if label paper has been selected as the sheet.

An alerting method according to an aspect of the disclosure includes a printing step of printing on a selected sheet by using a printing apparatus, and a control step of controlling the printing apparatus, and in the control step, if it is determined that label paper has been selected as the sheet, an alert screen for use of label paper is displayed.

According to an aspect of the disclosure, it is possible to provide an image forming apparatus and an alerting method capable of reducing a risk of occurrence of a malfunction such as apparatus failure during printing using label paper.

### BRIEF DESCRIPTION OF THE DRAWINGS

FIG. 1 is an external perspective diagram for describing an overall configuration of an image forming apparatus according to a first embodiment.
FIG. 2 is a diagram for describing a functional configuration of the image forming apparatus according to the first embodiment.
FIG. 3 is a flowchart explaining the flow of a process according to the first embodiment.
FIG. 4 is a diagram for describing an operation example according to the first embodiment.
FIG. 5 is a diagram for describing an operation example according to the first embodiment.
FIG. 6 is a diagram for describing an operation example according to the first embodiment.
FIG. 7 is a diagram for describing an operation example according to the first embodiment.
FIG. 8 is a diagram for describing an operation example according to the first embodiment.
FIG. 9 is a diagram for describing an operation example according to the first embodiment.
FIG. 10 is a diagram for describing an operation example according to the first embodiment.
FIG. 11 is a diagram for describing an operation example according to the first embodiment.
FIG. 12 is a diagram for describing an operation example according to the first embodiment.
FIG. 13 is a diagram for describing an operation example according to the first embodiment.
FIG. 14 is a diagram for describing an operation example according to the first embodiment.
FIG. 15 is a diagram for describing an operation example according to the first embodiment.
FIG. 16 is a diagram for describing an operation example according to the first embodiment.
FIG. 17 is a diagram for describing an operation example according to the first embodiment.
FIG. 18 is a flowchart explaining the flow of a process according to a second embodiment.
FIG. 19 is a flowchart explaining the flow of a process according to a third embodiment.
FIG. 20 is a flowchart explaining the flow of a process according to a fourth embodiment.

### DETAILED DESCRIPTION OF THE INVENTION

Hereinafter, embodiments of the disclosure will be described with reference to the drawings. The embodiments to be described below are merely examples for describing the disclosure, and the technical contents described in the claims are not limited to the following descriptions.

In an image forming apparatus such as a multifunction apparatus, printing is performed on label paper in some cases. In general, since label paper is paper of a seal type including a surface material, an adhesive, and a release liner (sealing paper), the label paper may adhere to the inside of the apparatus due to the release liner being peeled off or the adhesive protruding from the edges during paper feeding or printing.

If label paper sticks to the inside of the apparatus, it causes paper jams, which increases the possibility of normal printing not being performed. In severe cases, the user has difficulty repairing the apparatus, causing replacement of the unit in most cases.

In the related art, with respect to handling of label paper, most of precautions are described in separate instruction manuals. However, most users do not read such instruction manuals, and thus it is difficult to say that users have adequate knowledge of how to handle label paper.

The disclosure aims to realize, in the following embodiments, an image forming apparatus and the like that can reduce the risk of occurrence of malfunctions such as apparatus failure when printing on label paper by displaying a dialog box alerting the user to the use of label paper when it is determined that label paper has been selected as a sheet to be used for printing.

### 1 First Embodiment

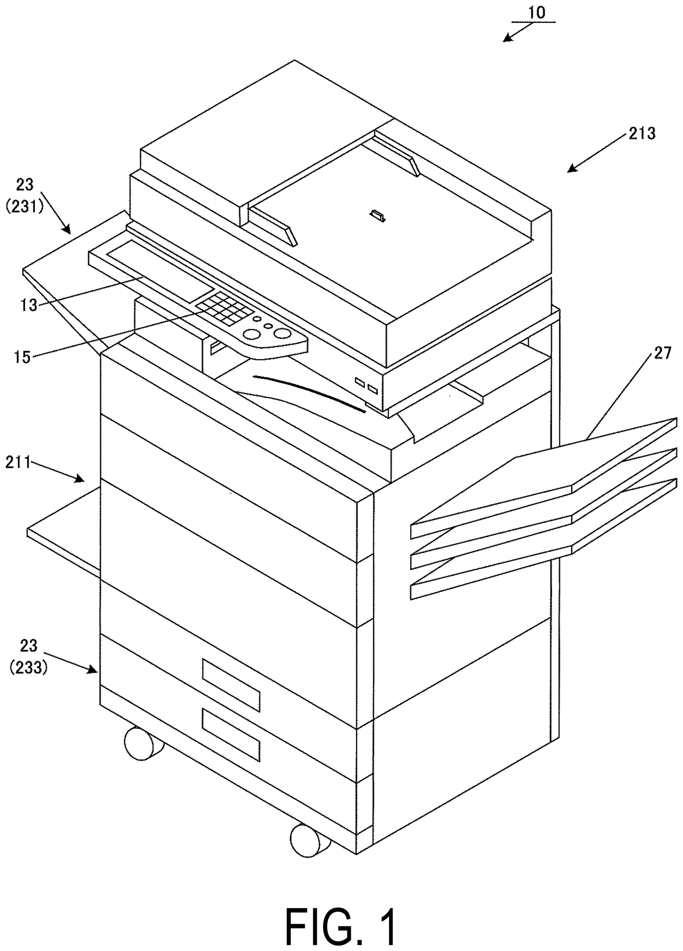

FIG. 1 is a diagram for describing an overall configuration of an image forming apparatus 10 according to a first embodiment. Although an embodiment of a multifunction apparatus will be described as an example of the image forming apparatus 10 in the first embodiment, the image forming apparatus 10 may be a printer, a copier, or a fax machine, each with limited job functions.

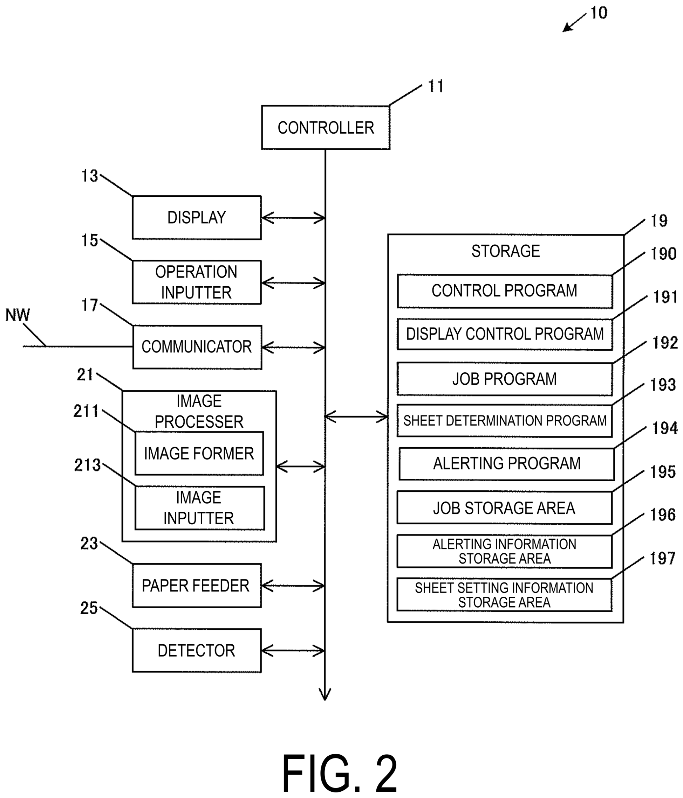

FIG. 2 is a diagram for describing a functional configuration of the image forming apparatus 10. The image forming apparatus 10 includes a controller 11, a display 13, an operation inputter 15, a communicator 17, a storage 19, an image processor 21, a paper feeder 23, and a detector 25.

The controller 11 comprehensively controls the image forming apparatus 10. The controller 11 can be configured by one or more central processing units (CPUs), digital signal processors (DSPs), or the like. By reading and executing various programs stored in the storage 19, the controller 11 realizes various functions provided by the image forming apparatus 10. The controller 11 may also be implemented as a System-on-a-Chip (SoC) having multiple functions among functions to be described below. The controller 11 may also be configured by one or more control circuits.

The display 13 can be configured by a display apparatus that can display various types of information to the users and the like, such as a liquid crystal display (LCD), an organic electro-luminescence (EL) display, a micro LED display, or a mini-LED display.

The operation inputter 15 receives operation input or information input from the user, or the like. The operation inputter 15 can be configured by, for example, various input devices such as operation keys including hard keys or software keys, or buttons. The operation inputter 15 can also be configured as a touch panel display that enables input through the display 13. In this case, as a method for input to the touch panel display, for example, a resistive film method, an infrared method, an electromagnetic induction method, a capacitive method, or the like can be employed.

The communicator 17 includes an interface for a wired and/or wireless network communication to communicate with another terminal device, such as a PC, through a network NW, for example, a local area network (LAN), a wide area network (WAN), the Internet, a telephone line, or a fax line. The interface for wireless network communication may include, for example, an interface related to short-range wireless communication such as Bluetooth (trade name), Wi-Fi (trade name), or IrDA.

The storage 19 is one or more storage apparatuses that store various programs and various types of data necessary for operations of the image forming apparatus 10. The storage 19 can be configured by a storage apparatus, for example, a random access memory (RAM), a solid state drive (SSD), a hard disk drive (HDD), a read only memory (ROM), and the like.

In the first embodiment, the storage 19 stores a control program 190, a display control program 191, a job program 192, a sheet determination program 193, and an alerting program 194, and secures a job storage area 195, an alerting information storage area 196, and a sheet setting information storage area 197.

The control program 190 is a program that the controller 11 reads to comprehensively control the image forming apparatus 10. The controller 11 having read the control program 190 controls driving of hardware such as the display 13, the operation inputter 15, the communicator 17, the image processor 21, the paper feeder 23, and the detector 25.

The display control program 191 is a program that the controller 11 reads to control an output of the screen displayed on the display 13 or the operation inputter 15 configured as a touch panel. The controller 11 having read the display control program 191 controls display of an operation screen (e.g., a home screen, a job setting screen, a system information screen, or the like) displayed on the display 13 (the operation inputter 15), a dialog box that is one aspect of an alert screen to be described later, or the like.

The job program 192 is a program that the controller 11 reads to execute various jobs, for example, a print job, a copy job, a scanning job, a fax transmission job, an e-mail transmission job, or the like. The controller 11 having read the job program 192 switches an apparatus mode of the image forming apparatus 10 to a job mode for executing each job for which an execution instruction has been received.

The sheet determination program 193 is a program that the controller 11 reads to determine a sheet to be provided for a print job based on sheet setting information (sometimes referred to as a paper feed tray setting or a sheet (type) setting) of a sheet set in the paper feeder 23. The controller 11 having read the sheet determination program 193 can also determine the sheet type, the sheet size, and the like of the sheet set in the paper feeder 23 based on the detection result for the sheet by the detector 25 to be described below. The controller 11 having read the sheet determination program 193 determines the sheet set in the manual feed tray 231 or the paper feed tray 233 based on the sheet determination information such as the information for identifying the sheet type (sheet type information) and the information for identifying the sheet size stored (sheet size information) in the sheet setting information storage area 197.

The alerting program 194 is a program that the controller 11 reads when it is determined that label paper has been selected as a sheet for the print job based on the sheet setting information of the sheet set in the paper feeder 23 and the sheet determination result based on the detection result for the sheet by the detector 25. The controller 11 having read the alerting program 194 cooperates with the display control program 191 to control display of a dialog box as an alert screen that is a display screen for issuing an alert about use of label paper. Although, in the disclosure, the form in which the controller 11 displays a dialog box as the alert screen is described, the alert screen may be, for example, a modal screen, a pop-up screen, or the like. Further, as a method for alert, an alert can be issued by using a sound output such as a beep sound or a light emission pattern such as blinking or lighting of a light emitting device such as an LED lamp.

The job storage area 195 is a storage area for storing information, job data, and the like necessary for the image forming apparatus 10 to execute various jobs such as a print job, a copy job, a scan job, a fax transmission job, and an e-mail transmission job.

The alerting information storage area 196 is a storage area for storing message information, image information, and the like related to alerts.

The sheet setting information storage area 197 is a storage area for storing sheet setting information (paper feed tray setting and the like) related to the paper feeder 23 in addition to sheet determination information about sheet determination such as sheet type information and sheet size information.

The image processor 21 includes an image forming unit 211 and an image inputter 213. The image forming unit 211 functions as a printer (printing apparatus) that feeds a sheet from the paper feeder 23, forms an image based on image data on the sheet, and then discharges the sheet to a paper discharger 27. The image forming unit 211 can be configured by, for example, a laser printer that employs electrophotography, or the like. In this case, the image forming unit 211 forms an image by using toners supplied from toner cartridges, which are not illustrated, corresponding to toner colors (e.g., cyan, magenta, yellow, and black).

The image inputter 213 generates image data by scanning documents. The image inputter 213 can be configured as a scanner apparatus equipped with an automatic document feeder (ADF), a flatbed for placing and reading a document, and the like, in addition to an image sensor such as a charge coupled device (CCD) or a contact image sensor (CIS). A configuration of the image inputter 213 is not particularly limited as long as the image inputter 213 is configured to read a reflected light image from a document image with the image sensor. The image inputter 213 can also be configured as an interface that can acquire image data stored in a storage medium such as a USB memory or image data transmitted from a terminal apparatus, which is not illustrated. The image processor 21 may have the form of performing, for example, shading correction or density correction on the image data input from the image inputter 213 to generate image data for image transmission.

The paper feeder 23 includes a manual feed tray 231 for placing a sheet thereon and a paper feed tray (paper feed cassette) 233 for storing sheets therein. Each of the manual feed tray 231 and the paper feed tray 233 is provided with the detector 25 to be described below, in addition to a guide member, which is not illustrated, for guiding a sheet to the image forming unit 211, a stopper member, which is not illustrated, for limiting movement of a sheet, and the like. In the paper feeder 23, for example, sheets of sheet types such as plain paper, cardboard, embossed paper, thin paper, printed sheet, recycled paper, letter-headed sheet, punched sheet, colored paper, label paper, glossy paper, OHP films, index paper, envelopes, postcards, and double postcards, and sheet sizes such as SRA3, A3W, A3, B4, SRA4, A4, A4R, B5, B5R, A5R, 12" × 18", 11" × 17", 8-1/2" × 14", 8-1/2" × 13-1/2" , 8-1/2" × 13-2/5", 8-1/2" × 13", 8-1/2" × 11" , 8-1/2" × 11" R, and 5-1/2" × 8-1/2" R can be set (stored). In this case, a sheet of a standard size such as plain paper or cardboard may be stored in the paper feed tray 233, and a sheet in a size other than the standard size such as embossed paper, thin paper, label paper, glossy paper, an OHP film, index paper, an envelope, a postcard, or a double postcard may be set in the manual feed tray 231. Although a mode in which label paper is set on the manual feed tray 231 will be mainly described in the following description, the disclosure can be applied to a case in which a sheet other than label paper is set on the manual feed tray 231, a case in which a sheet in a standard size is stored in the paper feed tray 233, or the like.

The detector 25 is a mechanical sheet detection member such as a push button switch or an optical sheet detection member such as an optical sensor provided in the paper feeder 23 such as the manual feed tray 231 or the paper feed tray 233. The detector 25 outputs, for example, a detection result of a sheet, such as long size/short size, a sheet thickness, and a basis weight of the sheet to the controller 11.

### 1.2 Processing Flow

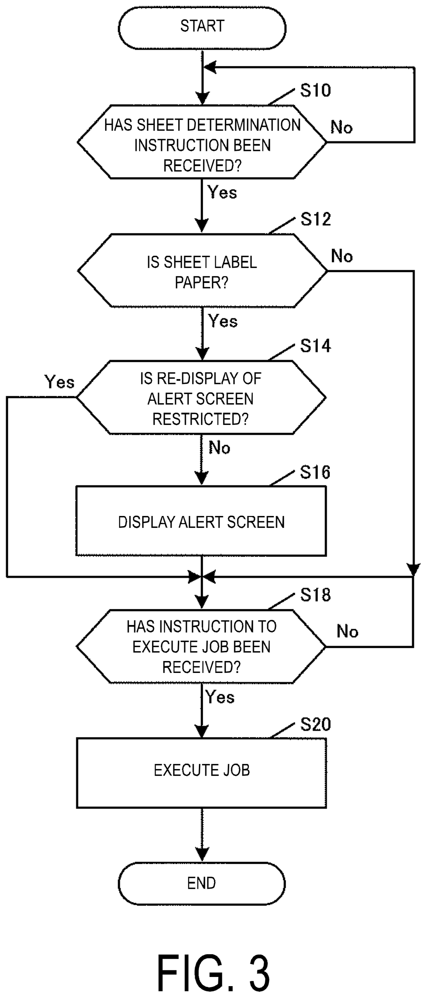

Next, the flow of a process according to the first embodiment will be described with reference to a flowchart in FIG. 3. The process described in FIG. 3 will be described as being executed by the controller 11 by reading the control program 190, the display control program 191, the job program 192, the sheet determination program 193, the alerting program 194, and the like.

When the process is started, the controller 11 determines whether a sheet determination instruction has been received (step S10). It is assumed in the first embodiment that five modes considered as a trigger of a sheet determination instruction are as follows:
· selection of a paper feed tray setting on the home screen;
· detection of a sheet on the manual feed tray;
· selection of a paper feed tray setting on the system information screen;
· selection of a sheet on the print job setting screen; and
· selection of a sheet type through a driver program. Each of the modes will be described in operation examples.

If it is determined that a sheet determination instruction has been received, the controller 11 determines whether the sheet for the print job is label paper (step S10: Yes → step S12). If it is determined that no sheet determination instruction has been received, the controller 11 waits until the sheet determination instruction is received (step S10: No).

If the controller 11 determines that the sheet for a print job is label paper, the controller 11 determines whether the restriction function that restricts re-display of the dialog box as an alert screen is enabled (step S12: Yes - step S14). On the other hand, if it is determined that the sheet for the print job is not label paper, the controller 11 causes the process to proceed to step S18 (step S12: No → step S18).

If the controller 11 determines that the restriction function that restricts re-display of the dialog box for an alert is disabled, the controller 11 displays the dialog box (step S14: No → step S16). On the other hand, if it is determined that the restriction function that restricts re-display of the dialog box for an alert is enabled, the controller 11 shifts the process to step S18 (step S14: Yes - step S18).

Then, the controller 11 determines whether an instruction to execute a print job has been received (step S18). If it is determined that an instruction to execute a print job has been received, the controller 11 executes the print job and terminates the process (step S18: Yes - step S20). On the other hand, if the controller 11 determines that an instruction to execute a print job has not been received, the controller 11 waits until an instruction to execute a print job is received (step S18: No).

### 1.3 Operation Example

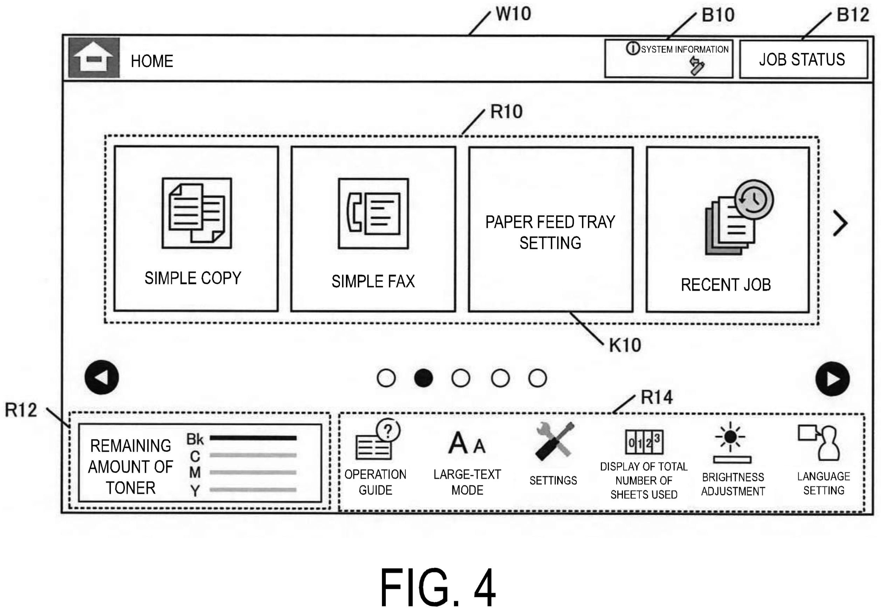

Next, operation examples according to the first embodiment will be described with reference to FIGS. 4 to 17.

### 1.3.1 Operation Example 1

Operation example 1 is an operation example in which a sheet determination instruction is triggered by selection of a paper feed tray setting on a home screen. FIG. 4 is a diagram for describing an example of a display configuration of a home screen W10 according to the operation example 1.

The home screen W10 is a basic screen that is displayed on the display 13, for example, at the time of power-on, at the time of standby, at the time of recovery from a sleep mode, and the like, and receives an instruction or an operation input by the user. The home screen W10 includes a system information button B10, a job status button B12, a mode selection area R10, an apparatus status display area R12, and a function selection area R14.

The system information button B10 is a button that receives an instruction to display the system information screen to be described below. The system information button B10 is displayed in a predetermined display area of the home screen W10. Upon receiving an instruction to select the system information button B10, the controller 11, for example, displays the system information screen which is an aggregated screen in which system information such as information related to apparatus maintenance such as paper shortage or firmware update, or apparatus information related to communication settings or the like is aggregated.

The job status button B12 is a button for receiving an instruction to display the job status screen which is not illustrated. Upon receiving an instruction to select the job status button B12, the controller 11 displays the job status screen that shows the job being executed or on standby with text or icons.

The mode selection area R10 is a display area that displays a shortcut key that receives an instruction to switch to various setting screens for modes and functions that can be realized by the image forming apparatus 10. FIG. 4 shows an example in which a paper feed tray setting shortcut key K10 is displayed in the mode selection area R10, in addition to shortcut keys related to simple copy, simple fax, and recent jobs. The paper feed tray setting shortcut key K10 is a shortcut key to receive an input of an instruction to display a paper feed tray setting screen W12 to be described in association with the next drawing.

The apparatus status display area R12 is a display area for displaying an apparatus status of the image forming apparatus 10. FIG. 4 illustrates an example in which the remaining amounts of toners are displayed in the apparatus status display area R12.

The function selection area R14 is a display area for displaying various buttons for receiving a change instruction, a reference instruction, and the like related to functional settings of the image forming apparatus 10. For example, when a large-text mode button is selected, a check mark is put on the right shoulder of the button, and the text size on the screen increases. When a total number of sheets used display button is selected, a display screen for displaying the total number of sheets used and the remaining amounts of toners (displayed in %) is displayed. The setting button is a button for receiving an instruction to display the system setting screen, which is not illustrated.

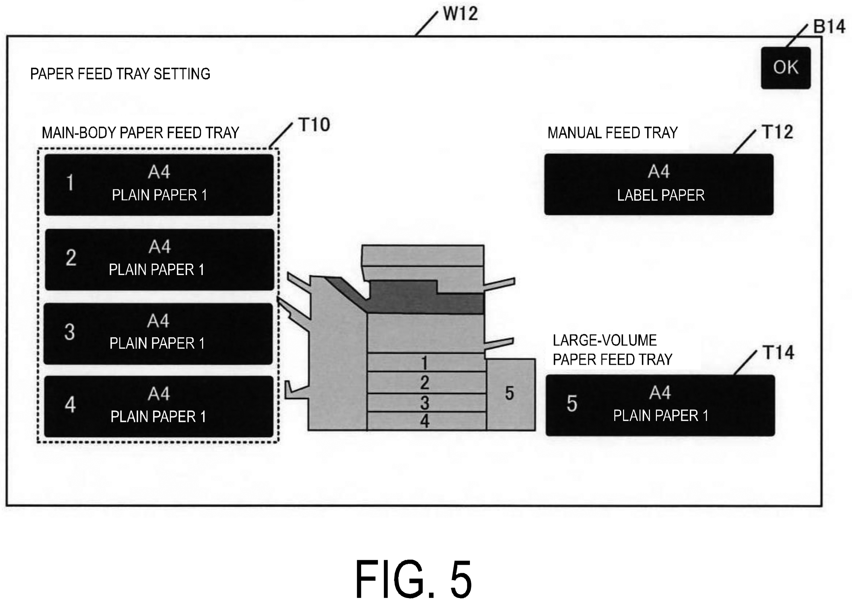

FIG. 5 is a diagram for describing an example of a display configuration of the paper feed tray setting screen W12 displayed by the controller 11 in response to an instruction from the user to select the paper feed tray setting shortcut key K10.

On the paper feed tray setting screen W12, a machine overview showing the mounting state of the paper feeder 23 such as the paper feed tray 233 and the manual feed tray 231 as an image is depicted in a substantially central portion of the screen, and trays that can be set for the paper feed tray settings are displayed as tray buttons T10 to T14 so as to surround the machine overview. Here, the tray button T10 is a button for receiving an instruction to display the sheet setting screen of the paper feed tray 233 (paper feed tray 1 to paper feed tray 4) provided in the main body of the image forming apparatus 10. The tray button T12 is a button for receiving an instruction to display the sheet setting screen for the manual feed tray 231. Further, the tray button T14 is a button for receiving an instruction to display the sheet setting screen of the paper feed tray 233 (large-volume paper feed tray 5) mounted as an option. The tray buttons T10 to T14 may display a sheet size (e.g., A4) and a sheet type (e.g., plain paper) set as the current paper feed tray setting.

An OK button B14 is a button for receiving an instruction to terminate the display of the paper feed tray setting screen W12. When the user selects any of the tray buttons T10 to T14 corresponding to the paper feed tray 233 or the manual feed tray 231 for which sheet settings are desired and selects the OK button B14, the controller 11 terminates the display of the paper feed tray setting screen W12 and displays a sheet setting screen W14, which will be described in the next drawing. The sheet setting screen W14 may be displayed so as to be superimposed on the paper feed tray setting screen W12.

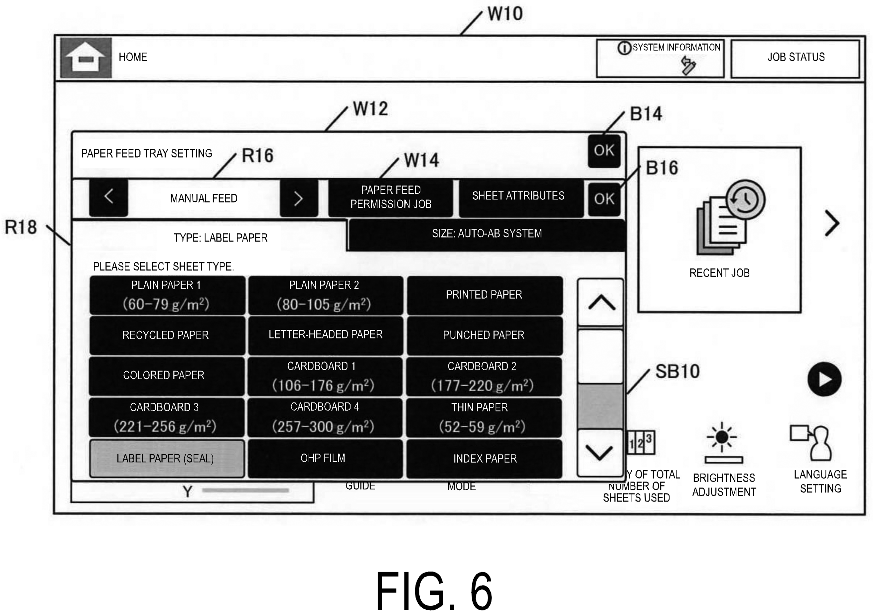

FIG. 6 is a diagram for describing an example of a display configuration of the sheet setting screen W14 displayed by the controller 11 in response to an instruction to select the tray button T12 corresponding to the manual feed tray 231 by the user in the paper feed tray setting screen W12.

The sheet setting screen W14 includes a paper feed tray selection status display area R16, a sheet setting area R18, and an OK button B16.

The paper feed tray selection status display area R16 is a display area for displaying the selection status of the paper feed tray 233 or the manual feed tray 231 selected with the tray buttons T10 to T14 on the paper feed tray setting screen W12. FIG. 6 illustrates a state in which the manual feed tray 231 has been selected as a target for the sheet setting. The target for the paper feed tray setting can be switched by arrow buttons provided on the left and right sides of the display area.

The sheet setting area R18 includes a type tab for receiving settings of a sheet type and a size tab for receiving settings of a sheet size. In FIG. 6, the type tab has been selected as a sheet setting, and plain paper 1 to index paper are displayed so as to be selectable as sheet types. Note that the selectable sheet types can be switched by operating a slider bar SB10 in the vertical direction provided in the drawing.

FIG. 6 illustrates a state in which label paper (seal) has been selected as the sheet type of the sheet to be set on the manual feed tray 231. In the first embodiment, when it is determined that a user has selected label paper as the sheet type for a print job, or when it is determined that the user has selected label paper again while the label paper is already selected as the sheet type, the controller 11 displays a dialog box D10 as an alert screen to be described in the next figure. On the other hand, when it is determined that the user has selected a sheet type other than label paper as the sheet type, the controller 11 does not display the dialog box D10 as an alert screen.

The OK button B16 is a button for receiving an instruction to terminate the display of the sheet setting screen W14. Upon selection of the OK button B16, the controller 11 terminates the display of the sheet setting screen W14. When the display of the dialog box D10 is terminated, the sheet setting screen W14 on which label paper has been selected is displayed, and when the display of the sheet setting screen W14 is terminated by selecting the OK button B16 in this state, the setting of the manual feed tray is completed.

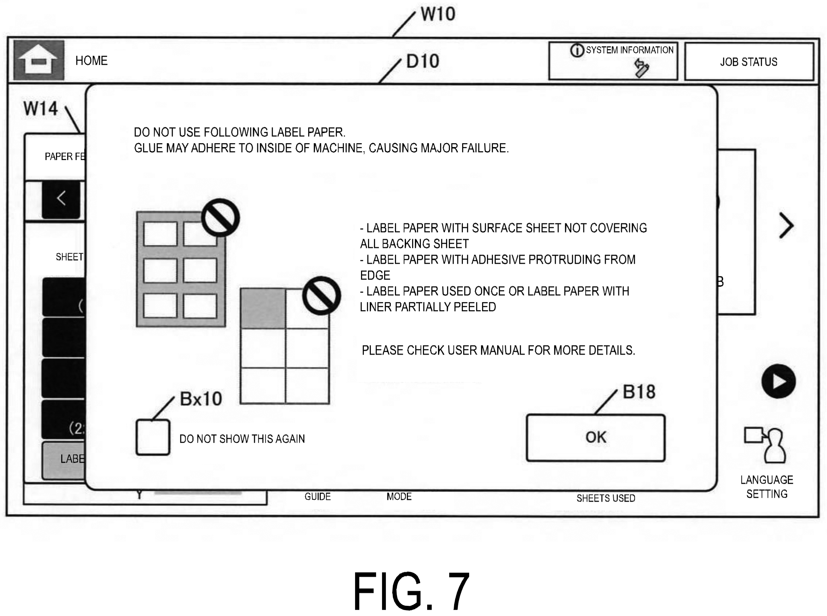

FIG. 7 is a diagram for describing an example of a display configuration of the dialog box D10 as an alert screen displayed by the controller 11 when a user has selected label paper as the sheet type. The dialog box D10 illustrated in FIG. 7 includes a message for alerting the use of label paper ( "Do not use the following label paper. Glue may adhere to the inside of the machine, causing a major failure...." ), a re-display restriction instruction selection box Bx10, and an OK button B18.

In the dialog box D10, by displaying a message related to the use of label paper and an image of a sheet whose use is restricted, an alert can be issued to the user. The re-display restriction instruction selection box Bx10 is an example of a selection unit that receives an input of an instruction to restrict re-display of the dialog box D10. By selecting (checking) the re-display restriction instruction selection box Bx10, re-display of the dialog box D10 can be restricted (the redisplay restriction function is enabled). By selecting (unchecking) the checked re-display restriction instruction selection box Bx10, the user can disable the redisplay restriction function of the dialog box D10. An OK button B18 is a button for receiving an instruction to terminate the display of the dialog box D10. Upon receiving an instruction to select the OK button B18 from the user who has read the message about the alert, the controller 11 terminates the display of the dialog box D10.

### 1.3.2 Operation Example 2

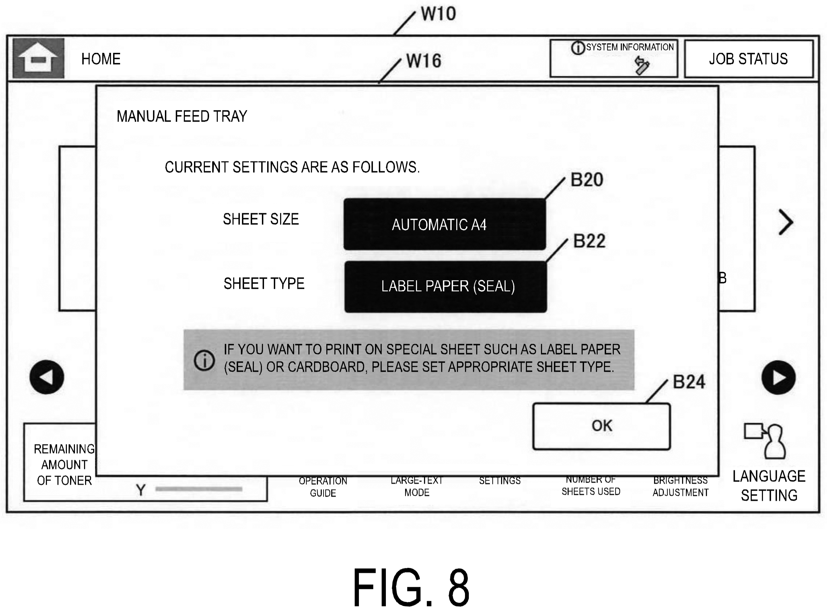

Operation example 2 is an operation example in which a sheet determination instruction is triggered by detection of a sheet on the manual feed tray 231. FIG. 8 is a diagram for describing an example of a display configuration of a detection result display screen W16 for displaying a detection result of a sheet set on the manual feed tray 231.

The detection result display screen W16 includes a sheet size button B20, a sheet type button B22, and an OK button B24.

The sheet size button B20 is a button for displaying a set or detected sheet size as a current setting and receiving a screen transition to a sheet size setting screen for receiving a setting of a sheet size.

The sheet type button B22 is a button for displaying the set sheet type as the current setting and receiving a screen transition to a sheet type setting screen for receiving the setting of the sheet type.

The OK button B24 is a button for receiving an instruction to terminate the display of the detection result display screen W16. On the detection result display screen W16, a message for prompting an alert regarding the sheet set on the manual feed tray 231 (e.g., "If you want to print on a special sheet such as label paper (seal) or cardboard, please set the appropriate sheet type" ) may be displayed together.

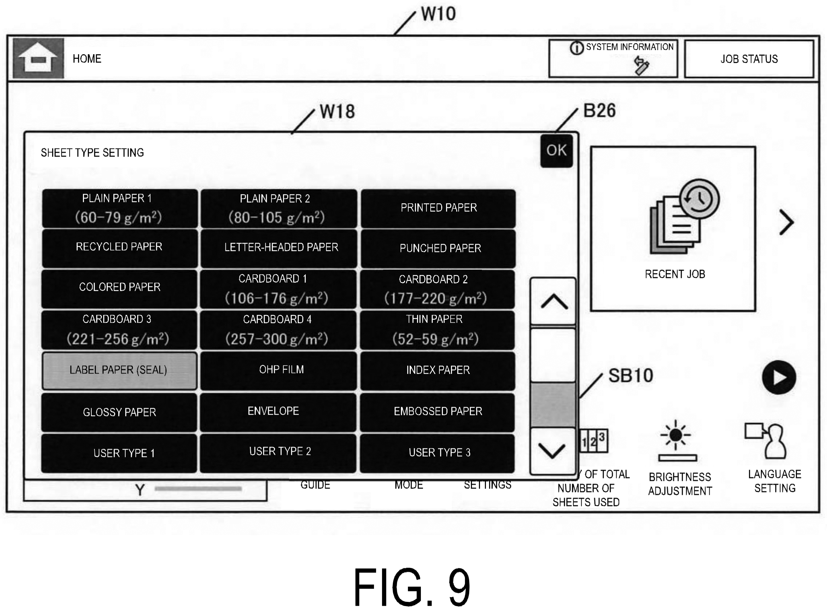

FIG. 9 illustrates an example of a display configuration of a sheet type setting screen W18 that the controller 11 displays upon receiving an instruction to select a sheet type button B22. The sheet type setting screen W18 may have a configuration equivalent to that of the type tab of the sheet setting area R18 illustrated in FIG. 6. In FIG. 9, plain paper 1 to user type 3 are displayed so as to be selectable as a sheet type. Note that a selectable sheet type can be switched by operating the slider bar SB10 in the vertical direction provided in the drawing.

FIG. 9 illustrates a state in which label paper (seal) has been selected as the sheet type of the sheet set on the manual feed tray 231. In the first embodiment, when it is determined that label paper has been selected as the sheet type for a print job, the controller 11 displays the dialog box D10 as the alert screen described in FIG. 7. When the user selects label paper as the sheet type, the controller 11 displays the dialog box D10. On the other hand, when the user selects a sheet type other than label paper as the sheet type, the controller 11 does not display the dialog box D10 for an alert.

An OK button B26 is a button for receiving an instruction to terminate the display of the sheet type setting screen W18. Upon selection of the OK button B26, the controller 11 terminates the display of the sheet type setting screen W18.

### 1.3.3 Operation Example 3

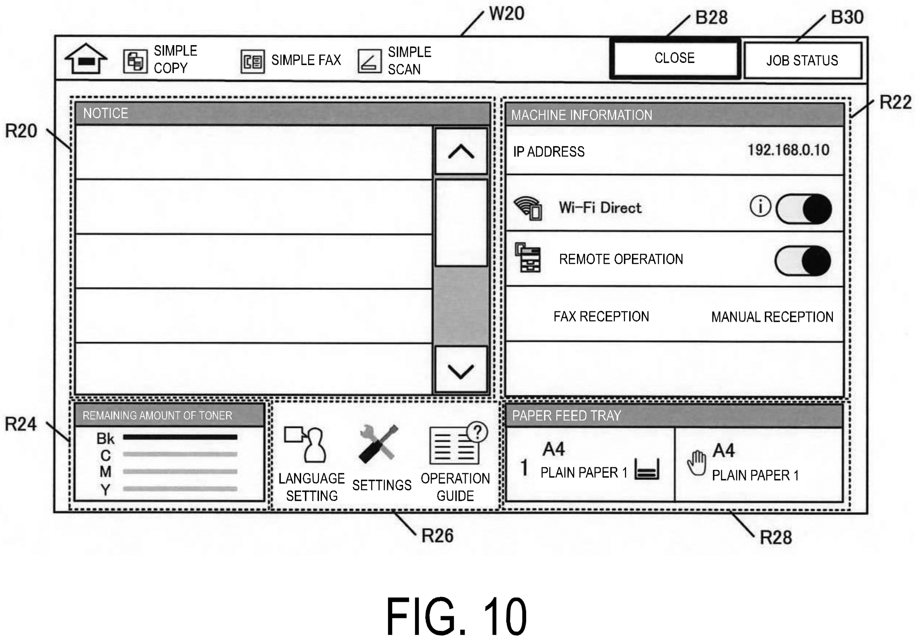

Operation example 3 is an operation example in which a sheet determination instruction is triggered by selection of a paper feed tray setting on a system information screen. FIG. 10 is a diagram for describing an example of a display configuration of a system information screen W20.

The system information screen W20 can be displayed by selecting the system information button B10 of the home screen W10 in FIG. 4. The system information screen W20 according to the first embodiment includes a notification display area R20, a machine information display area R22, an apparatus status display area R24, a function selection area R26, a paper feed tray display area R28, a close button B28, and a job status button B30.

The notification display area R20 is a display area for displaying notifications to the user. The notification display area R20 displays information having relatively high urgency (e.g., information on firmware update, or the like) to which the user should promptly respond to continuously execute the job to be performed.

The machine information display area R22 is a display area for displaying information about a machine status (e.g., a communication setting, a communication status, and the like). FIG. 10 illustrates an example in which IP addresses, Wi-Fi Direct for connecting devices without a wireless router, remote operations for remotely operating the image forming apparatus 10, fax reception settings, and the like are displayed as machine information in the machine information display area R22.

The apparatus status display area R24 is a display area for displaying apparatus statuses of the image forming apparatus 10. FIG. 10 illustrates an example in which the remaining amounts of toners are displayed in the apparatus status display area R24.

The function selection area R26 is a display area for displaying various buttons for receiving a change instruction, a reference instruction, and the like related to functional settings of the image forming apparatus 10. For example, when the language setting button is selected, the language to be used in the image forming apparatus 10 can be set. The setting button is further a button for receiving an instruction to display the system setting screen, which is not illustrated. An operation guide button is a button for receiving an instruction to display information for accessing the operation guide for helping the user use the image forming apparatus 10.

The paper feed tray display area R28 is a display area for displaying the type of sheet stored in the paper feed tray 233 and the like, the approximate number of remaining sheets (amount of remaining sheets), and the like, in addition to the tray buttons corresponding to the paper feed tray 233 and the manual feed tray 231 mounted in the image forming apparatus 10. Upon receiving an instruction to select a tray button displayed in the paper feed tray display area R28, the controller 11 displays the sheet setting screen W14 illustrated in FIG. 6. The configuration of the sheet setting screen W14 and the display of the dialog box D10 on the sheet setting screen W14 are the same as those in operation example 1, and thus the description thereof will be omitted here.

The close button B28 is a button that is displayed after the system information button B10 is changed in accordance with the display of the system information screen W20, and that receives an instruction to terminate the display of the system information screen W20.

The job status button B30 is a button for receiving an instruction to display the job status screen which is not illustrated. Upon receiving an instruction to select the job status button B30, the controller 11 displays the job status screen that shows the job being executed or on standby with text or icons.

### 1.3.4 Operation Example 4

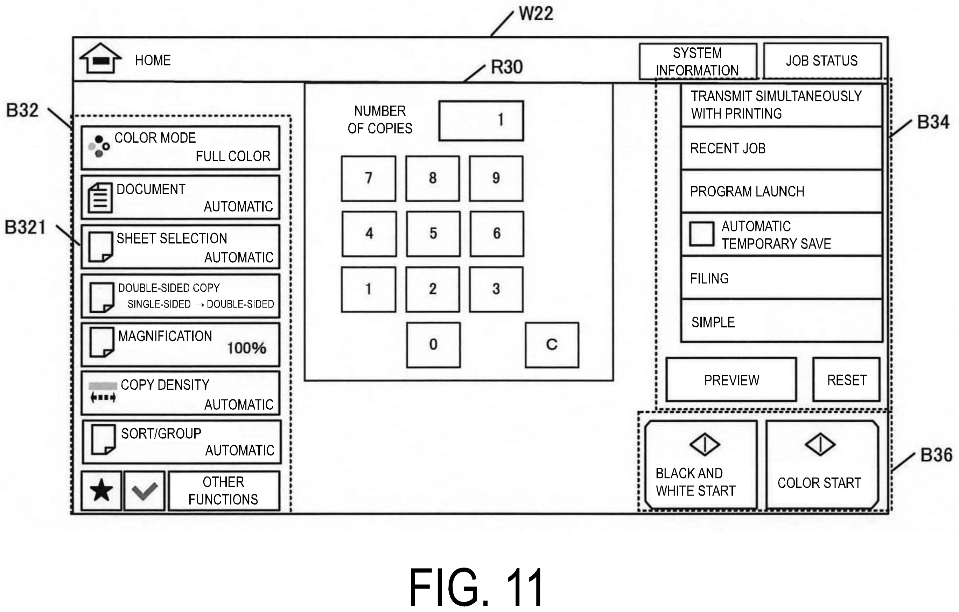

Operation example 4 is an operation example in which a sheet determination instruction is triggered by selection of a sheet on a setting screen for a print job. FIG. 11 is a diagram for describing an example of a display configuration of a settings screen W22 for a copy job as a print job.

The settings screen W22 has a screen configuration in which all settings for execution of a copy job can be made. The settings screen W22 includes set value buttons B32, operation control buttons B34, start buttons B36, and a copy quantity input area R30.

The set value buttons B32 are buttons for receiving selection and input of set values that can be set by the user. For example, the user can set a set value related to a color mode by selecting a color mode button and selecting a desired set value from items such as "full color" , "monochrome" , "single color" , and "automatic (color/monochrome)" , which are not illustrated. FIG. 11 is an example in which seven types of selection buttons including a color mode button, a document button, a sheet selection button B321, a double-sided copy button, a magnification button, a copy density button, and a sort/group button are provided as settable set value items. The set value buttons B32 include an other-functions button, in addition to the set value items described above. By selecting the other-functions button, the user can call other set value items other than the set value items being displayed, and select and input set values. The configuration of the set value buttons B32 illustrated in FIG. 11 is merely an example, and is not limited to the description items shown in FIG. 11.

When the user selects the sheet selection button B321 included in the set value buttons B32, the controller 11 displays a sheet selection screen W24 described in association with the next drawing.

The operation control buttons B34 include, in addition to a preview button and a reset button, for example, buttons for extended functions such as a button for performing transmission simultaneously with printing, a program launch button, an automatic temporary saving button, and a filing button. For example, the button for performing transmission simultaneously with printing enables the user to simultaneously perform printing of a read image and transmission to a predetermined destination (e.g., e-mail transmission, facsimile transmission, or the like) along with the execution of a copy job.

The operation control buttons B34 include a recent job button and a simple button. The recent job button receives an input of an instruction to retrieve history information. When the user selects the recent job button, the controller 11 displays a history information display screen, which is not illustrated. The simple button receives an instruction to switch to a simple settings screen, which is not illustrated, created by further simplifying the display configuration of the settings screen W22.

The start buttons B36 include a monochrome start button and a color start button. If the user wants a monochrome copy, the monochrome start button can be selected. On the other hand, if the user wants a color copy, the color start button can be selected. If the user selects either the monochrome start button or the color start button, the controller 11 causes a process related to a copy job to be performed.

The copy quantity input area R30 has a numeric entry means such as a ten-key pad and is an area for receiving input of copy quantities.

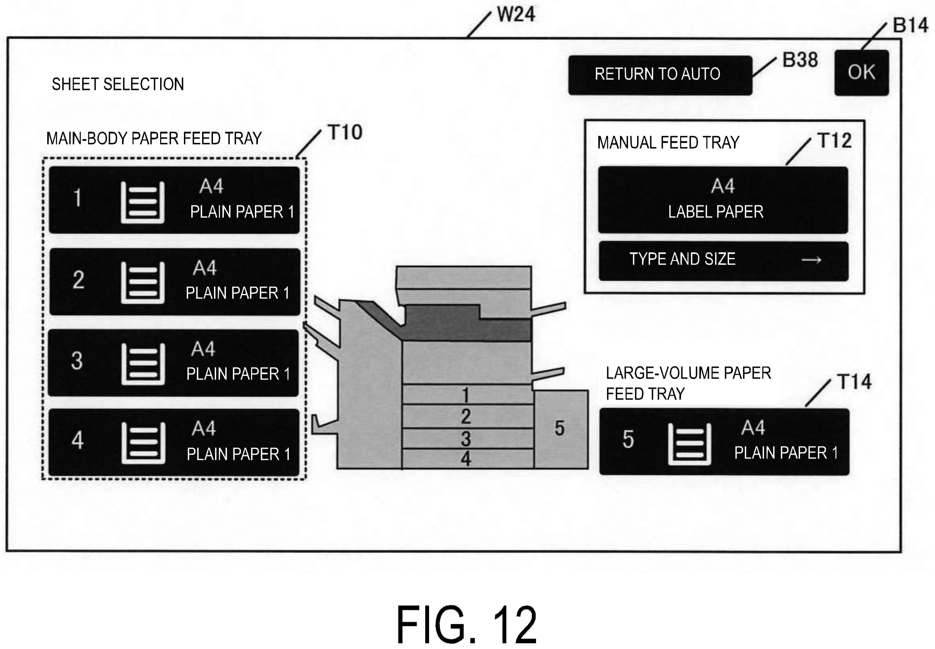

FIG. 12 is a diagram for describing an example of a display configuration of a sheet selection screen W24 displayed by the controller 11 in response to an instruction to select a sheet selection button B321 included in the set value buttons B32.

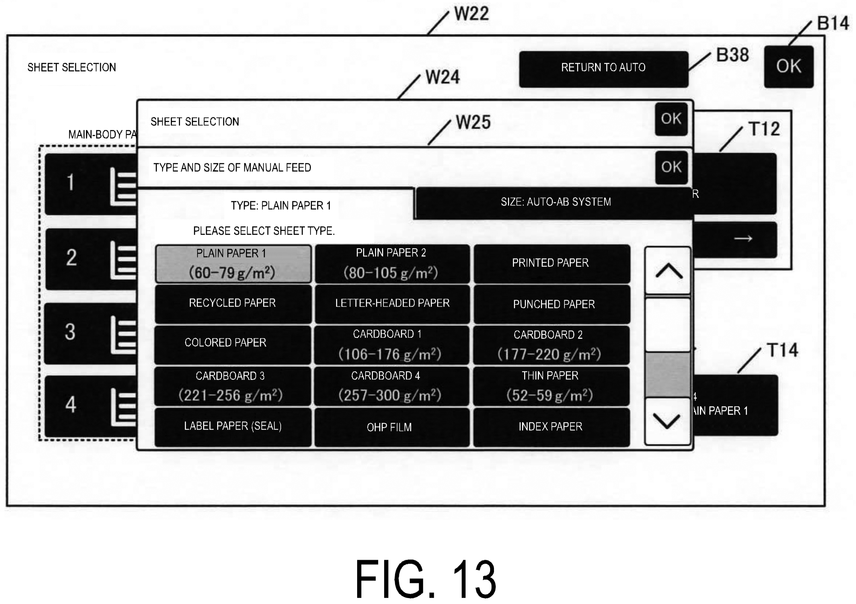

Although the sheet selection screen W24 may have substantially the same configuration as the paper feed tray setting screen W12 illustrated in FIG. 5, the tray buttons T10 and the T14 are different from the paper feed tray setting screen W12 in that the tray buttons display approximate amounts of remaining sheets in the corresponding paper feed tray 233, in addition to the sheet size (e.g., A4, or the like) and the sheet type (e.g., plain paper, or the like) set as the current paper feed tray setting. When the tray button T10, T14, or the like is selected on the sheet selection screen W24, the tray button is in a selected state. When the [type and size →] button below the tray button T12 is selected, the controller 11 causes a manual feed tray setting screen (manual feed type and size screen) W25 illustrated in FIG. 13 to be displayed on the sheet selection screen W24 in an overlapping manner.

The sheet selection screen W24 also includes a return-to-automatic button B38. The return-to-automatic button B38 is a button for receiving an instruction to return (change) the selection of the paper feed tray used for printing from the manual mode to the automatic mode. When the return-to-automatic button B38 is selected, the automatic sheet selection function is enabled, and the return-to-automatic button B38 is displayed indicating the selected state. The automatic sheet selection function is a function of automatically selecting a paper feed tray that stores sheets of an optimal sheet size according to the set state for printing. The return-to-automatic button B32 may be displayed when the automatic selection of sheets is set to be permitted (not set to be prohibited).

The configuration of the paper feed tray setting screen displayed by the controller 11 in response to the user's instruction to select the tray button T12 corresponding to the manual feed tray 231 may be identical to the configuration of the sheet setting screen W14 illustrated in FIG. 6, and thus the description thereof is omitted here.

### 1.3.5 Operation Example 5

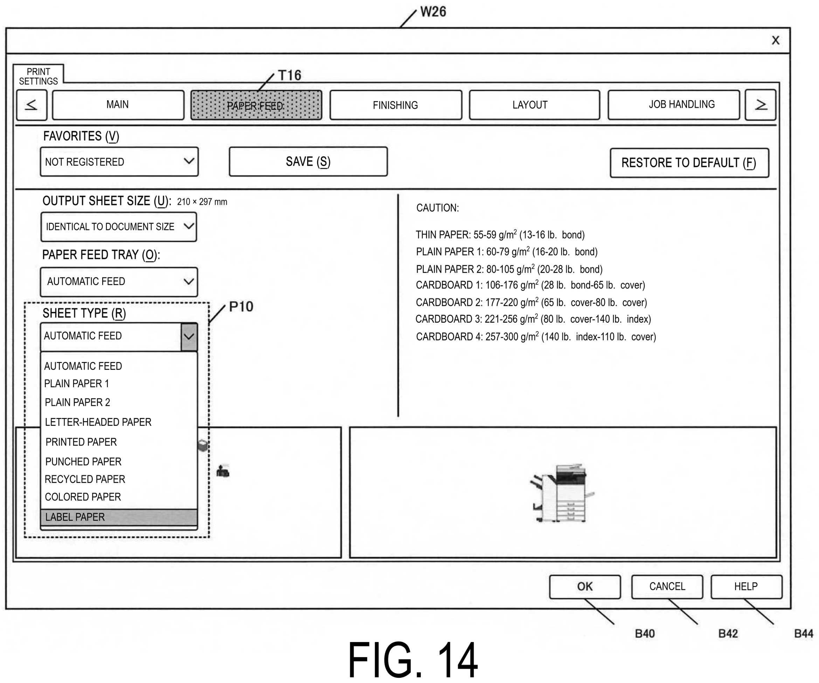

Operation example 5 is an operation example in which sheet selection through a driver program is used as a trigger of a sheet determination instruction. FIG. 14 is a diagram for describing an example of a display configuration of a driver program screen W26.

The driver program screen W26 is a screen provided by a driver program that is installed in a terminal apparatus or the like, which is not shown, and operates in cooperation with a document creation application, a diagram creation application, or the like, and can be displayed by selecting the print button or the like of the application. Although the configuration of the driver program screen W26 is described in operation example 5, the sheet type can be selected as illustrated in FIG. 14 on a remote operation screen, a browser screen, or the like when the image forming apparatus 10 has a functional configuration corresponding to remote operations or server functions.

FIG. 14 illustrates a state in which the paper feed (tab) T16 has been selected as a print setting on the driver program screen W26. The paper feed (tab) T16 includes a sheet type (R) pull-down menu P10, in addition to pull-down menus for settings of output sheet size (U) and paper feed tray (O).

The sheet type (R) pull-down menu P10 is a pull-down menu for receiving selection of a sheet type of a sheet for a print job through the driver program screen W26. FIG. 14 illustrates a state in which label paper has been selected as a sheet type. When a user selects label paper as a sheet type, the controller 11 displays the dialog box D10 as an alert screen illustrated in FIG. 7 on the display of the terminal apparatus, which is not illustrated.

An OK button B40 is a button for receiving an instruction to confirm the print settings through the driver program screen W26 and an instruction to terminate the display of the driver program screen W26. A cancel button B42 is a button for receiving an instruction to cancel a print setting through the driver program screen W26. A help button B44 is a button for receiving an instruction to display a help screen for helping the user with print settings through the driver program screen W26.

### 1.3.6 Other Operation Examples

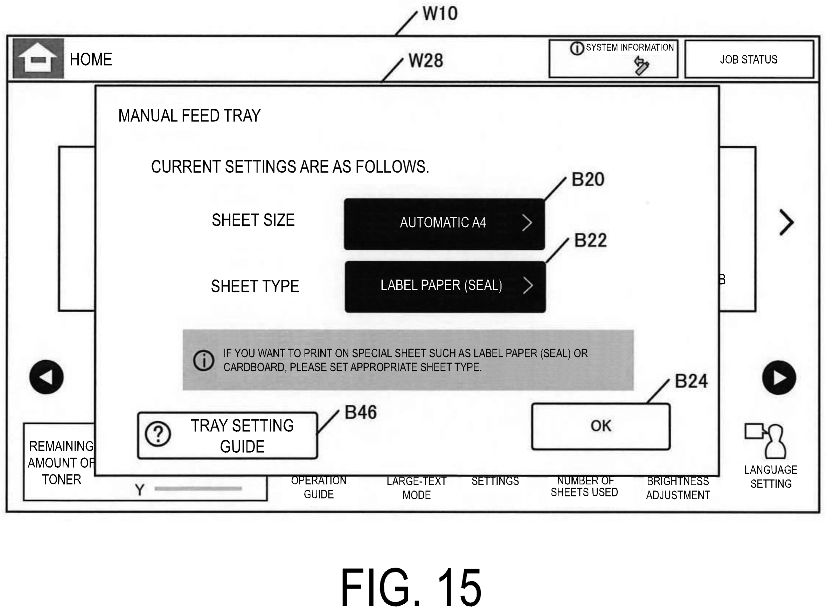

In FIGS. 15 to 17, other operation examples related to alerts issued to the user will be described.

FIG. 15 is a diagram for describing an example of a display configuration of a detection result display screen W28 with a tray setting guide button B46 provided on the detection result display screen W16 illustrated in FIG. 8. Parts having the same configuration as those of the detection result display screen W16 are denoted by the same reference numerals, and description thereof is omitted.

The tray setting guide button B46 is a button for receiving an instruction to display a tray setting guide screen W30 to be described in the next drawing.

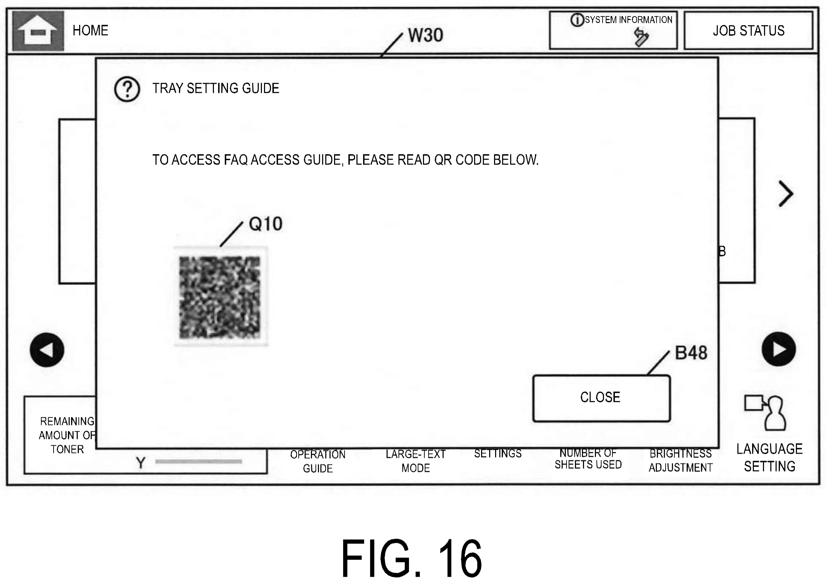

FIG. 16 is a diagram for describing an example of a display configuration of the tray setting guide screen W30 displayed by the controller 11 in response to an instruction to select the tray setting guide button B46. The tray setting guide screen W30 illustrated in FIG. 16 includes a help screen for helping the user with an operation method related to tray settings, encoded information Q10 created by encoding path information with respect to a moving image site that provides the operation method in a moving image, and a close button B48. Note that, for example, a guide prompting the user to hold a mobile terminal, such as a smartphone, over an NFC device may be displayed on the tray setting guide screen W30, instead of providing the encoded information D10.

As the encoded information Q10, a two-dimensional code (e.g., a quick response (QR) code, DataMatrix, or VeriCode) can be adopted. A QR code (registered trademark) is a two-dimensional code for representing data in a graphical format. As the encoded information, information created by encoding the path information with one or more of barcodes, symbols, and alphanumeric characters can be used, in addition to QR codes. The user can refer to the operation method for the tray settings by accessing the help screen or the moving image site by reading the encoded information Q10 with a camera function or the like included in the mobile terminal, for example.

The close button B48 is a button for receiving an instruction to terminate the display of the tray setting guide screen W30.

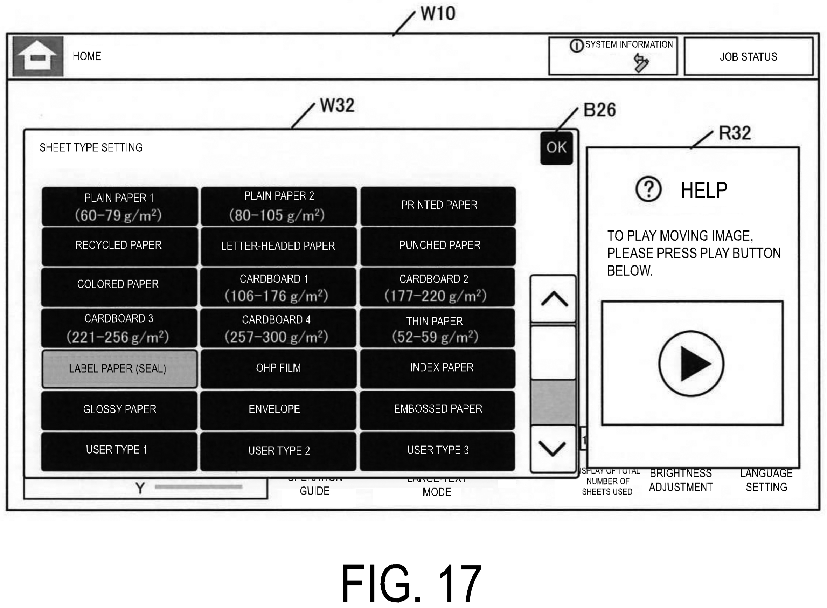

On the other hand, FIG. 17 is a diagram for describing an example of a display configuration of a sheet type setting screen W32 with a moving image play area R32 in which an operation method for tray settings can be played as a moving image provided on the sheet type setting screen W18 illustrated in FIG. 9.

The user can refer to the operation method for the tray settings by selecting the play button included in the moving image play area R32.

As described above, according to the first embodiment, it is possible to provide an image forming apparatus that can reduce the risk of occurrence of a malfunction such as apparatus failure at the time of printing using label paper because the image forming apparatus can display the dialog box for prompting issuance of an alert to the use of the label paper when it is determined that the sheet for the print job is label paper in response to the trigger of a sheet determination instruction such as the selection of the paper feed tray setting on the home screen, detection of sheets on the manual feed tray, selection of the paper feed tray setting on the system information screen, selection of a sheet on the print job setting screen, and selection of a sheet type through the driver program.

### 2 Second Embodiment

A second embodiment is a mode in which, in the first embodiment, regardless of whether the restriction function of restricting re-display of the dialog box for an alert is enabled or disabled, the dialog box for an alert is displayed when a paper jam (paper clogging) occurs during printing with the label paper.

A functional configuration of an image forming apparatus according to the second embodiment can be the same as that of the image forming apparatus 10 according to the first embodiment, and therefore the description thereof will be omitted here.

### 2.1 Flow of Process

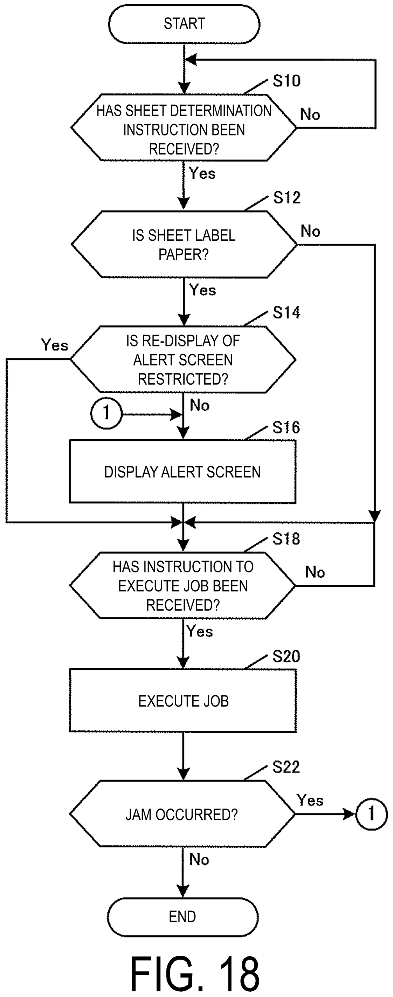

The flow of a process according to the second embodiment can adopt the process of the flowchart of FIG. 18 that is substituted for the flowchart of FIG. 3 of the first embodiment. Therefore, the same processing steps as those in FIG. 3 are denoted by the same step numbers, and description thereof may be omitted.

In step S22, the controller 11 determines whether a paper jam has occurred during execution of the print job (step S22). If it is determined that a paper jam has occurred, the controller 11 displays the dialog box for an alert (step S22: Yes - step S16). On the other hand, if it is determined that no paper jam has occurred, the controller 11 terminates the process (step S22: No).

As described above, according to the second embodiment, in addition to the effects of the first embodiment, the dialog box for an alert can be displayed when a paper jam has occurred during printing with the label paper, regardless of whether the restriction function of restricting re-display of the dialog box for an alert is enabled or disabled.

### 3 Third Embodiment

A third embodiment is a mode in which, in the first embodiment, the number of paper jam occurrences caused by a sheet fed from the manual feed tray is stored in association with identification information of the user who instructed execution of the print job in which the paper jam occurred, and a dialog box for an alert is displayed for a user whose number of paper jam occurrences exceeds a predetermined number at the time of printing performed using label paper.

A functional configuration of an image forming apparatus according to the third embodiment can include, in addition to the functional configuration of the image forming apparatus 10 according to the first embodiment, an authenticator that authenticates a user who logs in to the image forming apparatus 10, and a storage that stores the number of paper jam occurrences in association with identification information of a user who instructed execution of the print job in which the paper jam occurred.

### 3.1 Flow of Process

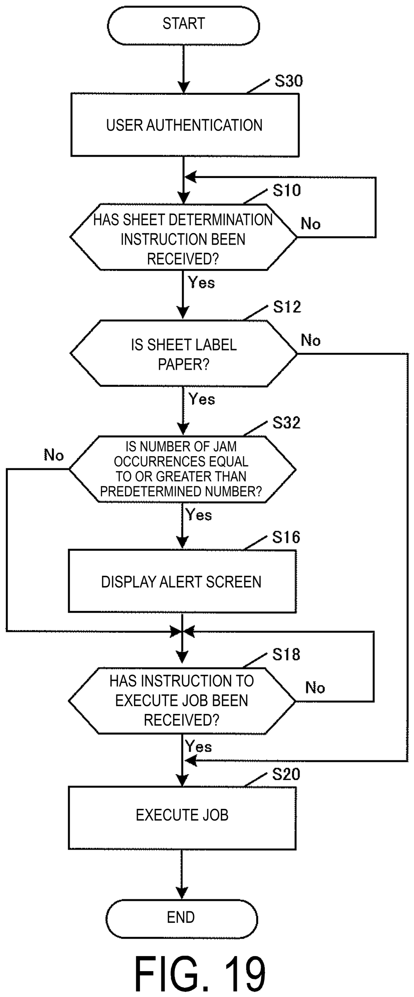

The flow of a process according to a third embodiment can adopt the process of the flowchart of FIG. 19 that is substituted for the flowchart of FIG. 3 of the first embodiment. Therefore, the same processing steps as those in FIG. 3 are denoted by the same step numbers, and description thereof may be omitted.

The controller 11 authenticates a user who has logged into the image forming apparatus 10 (login user) (step S30). Next, the controller 11 determines whether a sheet determination instruction has been received (step S10).

If it is determined that a sheet determination instruction has been received, the controller 11 determines whether the sheet for the print job is label paper (step S10: Yes → step S12). If it is determined that no sheet determination instruction has been received, the controller 11 waits until the sheet determination instruction is received (step S10: No).

If the controller 11 determines that the sheet for the print job is label paper, the controller 11 determines whether the number of paper jam occurrences while the user authenticated in step S30 is logged in is equal to or greater than a predetermined number (step S12: Yes - step S32). On the other hand, if it is determined that the sheet for the print job is not label paper, the controller 11 causes the process to step S18 (step S12: No → step S18).

If it is determined that the number of paper jam occurrences caused by the login user is equal to or greater than the predetermined number, the controller 11 displays the dialog box for an alert (step S32: Yes - step S16). Next, the controller 11 determines whether an instruction to execute a print job has been received (step S18). If it is determined that an instruction to execute a print job has been received, the controller 11 executes a print job and terminates the process (step S20). On the other hand, if the controller 11 determines that an instruction to execute a print job has not been received, the controller 11 waits until an instruction to execute a print job is received (step S18: No).

On the other hand, when it is determined that the number of paper jam occurrences caused by the login user is less than the predetermined number, the controller 11 skips the process of step S16 and determines whether an instruction to execute a print job has been received (step S32; No → step S18).

As described above, according to the third embodiment, in addition to the effects of the first embodiment, an alert for execution of printing using label paper can be issued to the (login) user whose number of paper jam occurrences exceeds a predetermined number.

### 4 Fourth Embodiment

A fourth embodiment is a mode in which a dialog box for an alert is displayed when the sheet for the print job is changed from a sheet other than label paper to label paper in the first embodiment.

A functional configuration of an image forming apparatus according to the fourth embodiment can be substantially the same as that of the image forming apparatus 10 according to the first embodiment, and therefore the description thereof will be omitted here.

### 4.1 Flow of Process

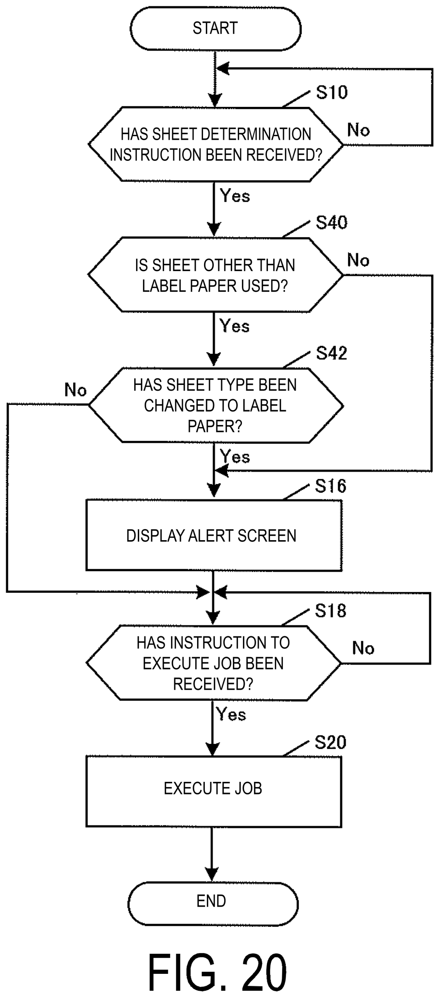

The flow of a process according to the fourth embodiment can adopt a process of the flowchart of FIG. 20 that is substituted for the flowchart of FIG. 3 of the first embodiment. Therefore, the same processing steps as those in FIG. 3 are denoted by the same step numbers, and description thereof may be omitted.

When the process is started, the controller 11 determines whether a sheet determination instruction has been received (step S10). If it is determined that a sheet determination instruction has been received, the controller 11 determines whether the sheet for the print job is a sheet other than label paper (step S10: Yes → step S40). If it is determined that no sheet determination instruction has been received, the controller 11 waits until the sheet determination instruction is received (step S10: No).

In step S40, if it is determined that the sheet for the print job is a sheet other than label paper, the controller 11 determines whether the sheet type of the sheet has been changed to label paper (step S40: Yes - step S42). On the other hand, if the sheet for the print job is not a sheet other than label paper (is label paper), the controller 11 displays the dialog box for an alert and executes the processing operations from step S18 (step S40: No → step S16 - step S18).

In step S42, if it is determined that the sheet type of the sheet for the print job has been changed to label paper, the controller 11 displays the dialog box for an alert and executes the processing operations from step S18 (step S42: Yes - step S16 - step S18). On the other hand, if it is determined that the sheet type of the sheet for the print job has not been changed to label paper, the controller 11 skips the processing operation of step S16 and performs the processing operations from step S18 (step S42: No → step S18).

As described above, according to the fourth embodiment, in addition to the effects of the first embodiment, when a sheet for a print job has been changed from a sheet other than label paper to label paper, the dialog box for an alert is displayed, and thereby an alert can be issued to the user.

The disclosure is not limited to the embodiments described above and can be modified in various ways. That is, embodiments obtained by combining appropriately modified technical means within the scope not departing from the gist of the disclosure are also included within the technical scope of the disclosure.

Further, although the above-described embodiments are described separately for convenience of description, it is obvious that the embodiments may be executed in combination within a technically possible scope.

Further, in the embodiments, a program operating on each apparatus is a program that controls a CPU or the like (a program for causing a computer to function) to realize the functions of the above-described embodiments. Information handled by such an apparatus is temporarily stored in a temporary storage device (e.g., a RAM) during processing thereof and then stored in various storage devices such as read only memories (ROMs) and HDDs, and is read, modified, and written by the CPU as necessary.

Here, a computer-readable non-transitory recording medium on which a program is recorded in an information processing apparatus may be any of a semiconductor medium (e.g., a ROM or a non-volatile memory card), an optical recording medium/magnetic optical recording medium (e.g., a digital versatile disc (DVD), magneto optical disc (M0), mini disc (MD), compact disc (CD), or Blu-ray (trade name) disc (BD)), a magnetic recording medium (e.g., a magnetic tape or flexible disk), and the like. In this case, the program recorded on the recording medium is read by the computer of the information processing apparatus and executed by the computer, such that not only the functions of the above-described embodiments but also functions of the disclosure are realized by performing processing in cooperation with an operating system, another application program, or the like based on instructions of the program.

Further, when a program is distributed in a market, the program can be stored in a portable recording medium and distributed, or can be transferred to a server computer connected through a network such as the Internet. In this case, it is obvious that a storage apparatus of the server computer is also included in the disclosure.

Further, each functional block or feature of the apparatus used in the above-described embodiments can also be implemented and executed by an electric circuit, for example, an integrated circuit or a plurality of integrated circuits. The electric circuit designed to enable the functions described herein may include a general-purpose processor, a digital signal processor (DSP), an application-specific integrated circuit (ASIC), a field programmable gate array (FPGA), another programmable logic device, a discrete gate or transistor logic, a discrete hardware component, or a combination thereof. The general-purpose processor may be a microprocessor or may be a known processor, controller, microcontroller, or state machine. The electric circuit described above may include a digital circuit or an analog circuit. Further, when an integrated circuit technology for replacement into a current integrated circuit emerges with the development of semiconductor technology, a new integrated circuit based on the technology may also be used in one or more modes of the disclosure.

## Claims

1. An image forming apparatus (10) comprising:
a display (13);
a printer (211) capable of printing on a selected sheet; and
one or more controllers (11),
wherein the one or more controllers (11) display, on the display, an alert screen for use of label paper if the label paper has been selected as the sheet.

2. The image forming apparatus (10) according to claim 1,
wherein the one or more controllers (11) display, on the display (13), a selection screen for receiving an instruction to select the sheet, and display, on the display (13), the alert screen if it is determined that a user has selected the label paper through the selection screen.

3. The image forming apparatus (10) according to claim 1 or 2,
wherein the alert screen includes a selection means that receives an input to enable or disable a restriction function for restricting re-display of the alert screen.

4. The image forming apparatus (10) according to claim 3,
wherein one or more controllers (11) display the alert screen regardless of whether the restriction function is enabled or disabled when a paper jam occurs during feeding of the label paper.

5. The image forming apparatus (10) according to claim 1, comprising:
a detector (25) that detects a sheet,
wherein the one or more controllers (11) display the alert screen if it is determined that the label paper has been selected as the sheet based on a detection result by the detector (25).

6. The image forming apparatus (10) according to claim 1, comprising:
a communicator (17) that communicates with a terminal apparatus,
wherein the one or more controllers (11) display the alert screen if it is determined that the user has selected the label paper through a driver program operating on the terminal apparatus.

7. The image forming apparatus (10) according to claim 1, comprising:
a storage (19) that stores the number of paper jam occurrences in association with identification information of a user who instructed execution of a print job in which the paper jam occurred,
wherein the one or more controllers (11) display the alert screen to the user whose number of paper jam occurrences exceeds a predetermined number when executing printing using the label paper.

8. An alerting method comprising:
printing on a selected sheet by using a printing apparatus (211); and
controlling the printing apparatus (211),
wherein, in the controlling, an alert screen for use of label paper is displayed if it is determined that the label paper has been selected as the sheet.
